(19) Europäisches Patentamt
European Patent Office
Office européen des brevets

(11) EP 2 722 956 B1

(12) **FASCICULE DE BREVET EUROPEEN**

(45) Date de publication et mention
de la délivrance du brevet:
**15.11.2017 Bulletin 2017/46**

(51) Int Cl.:
*H02M 1/15* *(2006.01)*          *H02P 21/00* *(2016.01)*

(21) Numéro de dépôt: **13306274.5**

(22) Date de dépôt: **17.09.2013**

(54) **Système électrique à puissance continue stabilisé par un filtrage actif intégré**

Elektrisches Dauerleistungssystem, das durch eine integrierte Aktivfilterung stabilisiert wird

Continuously powered electrical system stabilised by built-in active filtering

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.10.2012 FR 1202804**

(43) Date de publication de la demande:
**23.04.2014 Bulletin 2014/17**

(73) Titulaire: **IFP Energies nouvelles
92500 Rueil-Malmaison (FR)**

(72) Inventeur: **Miliani, El Hadj
92500 Rueil-Malmaison (FR)**

(56) Documents cités:
**EP-A2- 0 642 211          CN-A- 102 510 229
DE-A1-102005 041 936     US-A- 3 849 677**

**Description**

La présente invention concerne le domaine de l'optimisation des réseaux électriques à puissance continue, notamment embarqués à bord de véhicules.

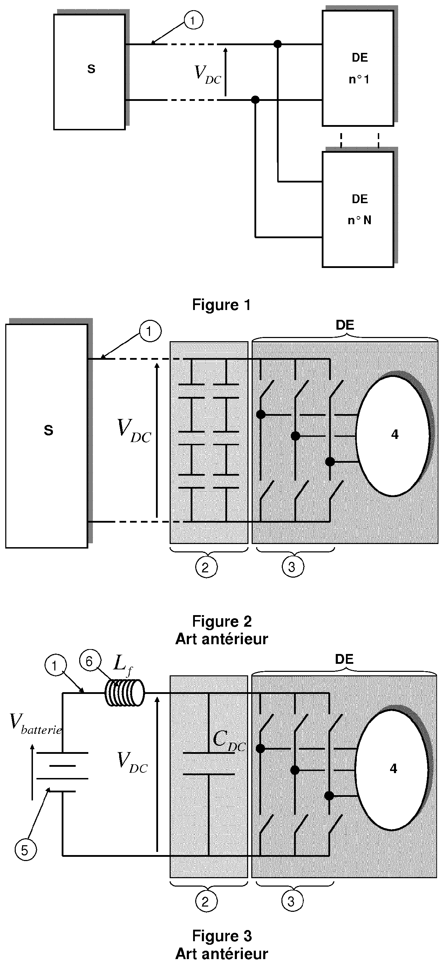

De nos jours, le développement d'architectures de réseaux électriques embarqués à puissance continue distribuée, concerne de nombreux domaines d'activités tels que l'automobile, la construction ferroviaire, la construction navale ou l'aéronautique. C'est pourquoi la recherche de solutions fiables, compactes et à coût réduit en vue de l'optimisation de ces systèmes est nécessaire. Bien que ces systèmes offrent la possibilité de connecter plusieurs dispositifs électriques (DE), appelés aussi charges, de natures différentes à un bus continu commun (1) (figure 1), les interactions entre ces dispositifs électriques (DE) peuvent conduire à un comportement instable du système.

En effet, certains dispositifs électriques (DE) comme par exemple ceux constitués d'un ensemble onduleur (3) et machine électrique (4) modifient le contenu harmonique des grandeurs continues, c'est-à-dire du courant et de la tension. Il peut être ainsi nécessaire de réduire, voire de supprimer cette pollution harmonique provoquée par le découpage de l'onduleur selon les techniques de MLI (Modulation de Largeur d'Impulsions, technique couramment utilisée pour synthétiser des signaux alternatifs à l'aide de circuits à fonctionnement tout ou rien). Deux contraintes fondamentales pèsent sur ce type de système ; la stabilité et la qualité de l'énergie embarquée. La maîtrise de ces deux contraintes permet ainsi de réduire la taille (volume et poids) de ces systèmes et de contrôler au mieux les grandeurs garantissant une durée de vie augmentée des éléments source de puissance comme par exemple une batterie dans le cas automobile.

En réponse à la problématique soulevée, une solution largement répandue est l'emploi "d'ensembles de condensateurs" (2) de forte capacité (association de condensateurs en série et en parallèle) dont le rôle est d'apporter un filtrage passif permettant l'absorption des harmoniques polluants. Ces condensateurs sont généralement placés directement en amont des onduleurs (3) et dimensionnés pour obtenir une très bonne qualité de l'énergie et notamment de la tension du bus continu (figure 2). Les documents suivants décrivent l'utilisation "d'ensembles de condensateurs" :

- Nicolas PATIN, The Dung NGUYEN, and Guy FRIEDRICH. Impact des stratégies de contrôle et des topologies d'onduleur sur la stabilisation du bus continu dans les systèmes embarqués. Conférence EF, Septembre 2009.
- The Dung NGUYEN, Nicolas PATIN, and Guy FRIEDRICH. Analyse des sollicitations sur les condensateurs de filtrage du bus continu d'onduleur pour applications embarquées. Workshop, 2010.

Or, pour garantir ces performances, ces ensembles de condensateurs (2) à fortes capacités sont volumineuses et représentent environ un tiers du volume et du coût des onduleurs de puissance. C'est pourquoi il est nécessaire de chercher à réduire ces éléments passifs tout en maîtrisant les deux contraintes principales de stabilité et de qualité du réseau continu.

D'une manière simple, la stabilité peut être définie comme le fait que les grandeurs d'état d'un système restent "voisines" d'un point de fonctionnement défini par exemple par leur état d'équilibre quand bien même le système est soumis à des perturbations extérieures. L'influence de la valeur de capacité pour un système composé d'une batterie (5) (source de tension d'entrée), d'un condensateur de filtrage $C_{dc}$ (2) ainsi que d'un ensemble onduleur (3) et machine électrique (4) est étudiée pour illustrer le lien entre la valeur du condensateur et le problème de stabilité. L'inductance de fuite $L_f$ due au câblage est modélisée par une inductance (6) entre la source et le condensateur du bus équivalent (figure 3).

Lorsque la capacité est faible (par exemple $100\mu F$) et l'inductance de fuite importante, l'interaction entre le filtre $L_f$-$C_{dc}$ et l'ensemble onduleur-machine provoque une perte de stabilité. En revanche, une capacité élevée (par exemple dix fois supérieure) permet d'assurer la stabilité du système. On rappelle que la capacité du condensateur dépend de la taille de celui-ci, ainsi une capacité élevée nécessite un volume important.

Si en revanche l'inductance de fuite due au câblage (non maîtrisable) est relativement faible, la stabilité est assurée mais l'amplitude des ondulations liées à la modulation provoquée par le découpage de l'onduleur est augmentée.

Ces quelques résultats montrent que le condensateur du bus continu possède une double utilité. Il permet tout d'abord d'éliminer les risques de perte de stabilité en réduisant le domaine d'interaction entre le filtre ($L_f$-$C_{dc}$) et la charge. Il permet également d'atténuer fortement les variations d'amplitudes d'ondulations garantissant des grandeurs continues pratiquement lisses. C'est pourquoi toute réduction de la taille de ces éléments passifs doit s'accompagner d'une action corrective visant la stabilisation et la réduction des ondulations des grandeurs électriques du bus continu.

Dans le but de réduire l'encombrement de systèmes électriques, l'électronique de puissance est de plus en plus intégrée dans la machine électrique. Toutefois, si c'est cela est possible pour les interrupteurs de l'onduleur, qui sont alors placés sur le stator de la machine électrique, cela devient plus compliqué quand il s'agit de l'ensemble de condensateurs. En effet, ces éléments passifs, par fabrication ne peuvent pas être totalement intégrés à la machine, et la seule manière de faire une électronique de puissance intégrée à la machine est de les poser sur la machine et ils gardent ainsi leur poids, leur volume et leur fragilité de fonctionnement. De plus, l'intégration de l'ensemble de condensateurs engendre également des problèmes liés aux éléments chimiques du condensateur. En effet, les condensateurs sont de construction chimique et sont sensibles aux conditions de fonctionnement sévères telles que les vibrations. Et par conséquent, l'utilisation d'un "ensemble de condensateurs" ne permet pas de prévoir l'intégration totale de l'électronique de puissance au sein du dispositif électrique.

Le système électrique selon l'invention se base sur l'utilisation d'un filtre actif commandé, assurant une stabilisation des grandeurs électriques. Un tel filtre actif est par exemple décrit dans DE 10 2005 041 936 A1. Le filtre actif de l'invention est monté en parallèle d'un condensateur de capacité réduite par rapport aux solutions classiques. De plus, ce filtre actif est au moins en partie intégré au sein du dispositif électrique. Ainsi, on obtient une réduction du volume et du poids du système, tout en conservant une qualité et une stabilité de l'énergie électrique embarquée. L'invention permet également de réduire le coût d'un tel système.

**Le système selon l'invention**

L'invention concerne un système électrique comprenant au moins une source d'énergie électrique à puissance continue, au moins un dispositif électrique connecté à ladite source, et un condensateur connecté en parallèle dudit dispositif électrique. Le système électrique comprend en outre des moyens de filtrage actif commandés entre ladite source et ledit dispositif électrique, pour injecter ou absorber des ondulations du courant fourni $i_e$ par ladite source et pour réduire les fluctuations de la tension $v_{DC}$ aux bornes de ladite source, lesdits moyens de filtrage actifs étant au moins en partie intégrés au sein dudit dispositif électrique. Selon l'invention, ledit condensateur est disposé sur le dispositif électrique. Ledit dispositif électrique comprend au moins un onduleur et une machine électrique, lesdits moyens de filtrage actifs étant au moins en partie intégrés au sein de ladite machine électrique.

De manière avantageuse, ledit onduleur comprend des interrupteurs commandés posés sur ladite machine électrique.

Selon un mode de réalisation de l'invention, lesdits moyens de filtrage actif sont constitués de quatre interrupteurs commandés formant un pont en H et d'un inducteur, placé en parallèle dudit pont et intégré au sein de ladite machine électrique.

Alternativement, lesdits moyens de filtrage actif sont constitués de huit interrupteurs commandés formant deux ponts en H et de deux inducteurs, placés respectivement en parallèle d'un desdits ponts et intégrés au sein de ladite machine électrique.

Selon l'invention, lesdits interrupteurs sont posés sur ladite machine électrique.

Avantageusement, les interrupteurs sont commandés par deux boucles de régulation, comprenant respectivement un filtre passe haut et un régulateur, chaque boucle de régulation commandant deux interrupteurs.

De préférence, ledit régulateur est un comparateur à hystérésis.

En outre, lesdits moyens de filtrage actif peuvent être connectés directement en parallèle dudit condensateur.

De manière avantageuse, la commande desdits moyens de filtrage actif est dépendante de deux variables qui sont le signe de l'ondulation du courant d'entrée de l'onduleur $\tilde{i}_{DC}$ et les ondulations de la tension de bus $\tilde{v}_{DC}$.

Selon un mode de réalisation de l'invention, le système comporte des moyens de stabilisation dynamique du *courant* $i_e$ fourni par ladite source et de la tension $v_{DC}$ aux bornes de ladite source.

De préférence, lesdits moyens de stabilisation dynamique correspondent à une boucle de régulation dans la commande de ladite machine électrique qui a le même effet qu'une résistance R qui serait directement placée en parallèle du condensateur et des moyens de filtrage actif.

De plus, la boucle de régulation desdits moyens de stabilisation dynamique (11') peut être constituée d'un gain $\dfrac{1}{R}$ et d'un filtre passe-bas.

L'invention concerne également un véhicule, notamment hybride ou électrique, comportant un système électrique selon l'invention.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1, déjà décrite, illustre un système à puissance électrique distribuée.

Les figures 2 et 3, déjà décrites, représentent un système électrique selon l'art antérieur.

La figure 4 illustre l'invention.

La figure 5 représente une première variante de réalisation de l'invention.

Les figures 6 et 7 représentent un mode de réalisation de la commande de la première variante de l'invention.

La figure 8 illustre une réponse temporelle du système selon la première variante de l'invention.

La figure 9 illustre une réponse fréquentielle du système selon la première variante de l'invention.

Les figures 10a) et 10b) illustrent une autre réponse temporelle du système selon la première variante de l'invention, pour laquelle l'inductance de câblage n'est plus négligeable.

La figure 11 représente une deuxième variante de réalisation de l'invention

La figure 12 représente une troisième variante de réalisation de l'invention.

La figure 13 représente une commande de la troisième variante de réalisation.

Les figures 14a), 14b) illustrent des réponses temporelles pour la première variante de réalisation de l'invention

La figure 15 illustre des réponses temporelles pour la troisième variante de réalisation de l'invention.

Les figures 16 et 17 illustrent l'intégration des composants du système selon la première variante de l'invention.

## Description détaillée de l'invention

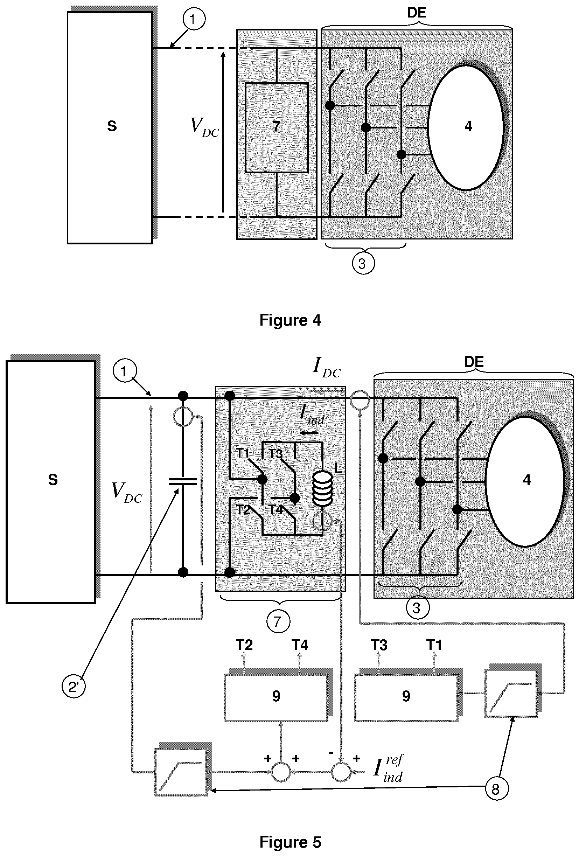

Le système électrique selon l'invention comprend au moins une source d'énergie électrique à puissance continue (S), au moins un dispositif électrique (DE) connecté à ladite source et consommateur d'un courant $i_e$ fourni par ladite source (S) et d'une tension $v_{DC}$ aux bornes de ladite source (S), et un condensateur (2) connecté en parallèle dudit dispositif électrique (DE) ainsi que des moyens de filtrage actif commandés (7, 7') entre ladite source (S) et ledit dispositif électrique (DE), pour injecter ou absorber des ondulations du courant fourni $i_e$ par ladite source et pour réduire les fluctuations de la tension $v_{DC}$ aux bornes de ladite source (figure 4). Classiquement, le dispositif électrique (DE) est composé d'un onduleur (3) et d'une machine électrique (4).

L'invention est apte à être embarquée dans un véhicule, notamment automobile, ferroviaire ou naval, hybride ou électrique, toutefois elle peut également convenir à tout système fonctionnant à batteries.

On appelle moyens de filtrage actif (7, 7'), des moyens réalisant un filtrage de courant, permettant d'injecter ou d'absorber les ondulations du courant et les fluctuations de la tension de bus. Ces moyens peuvent être commandés, au contraire des moyens de filtrage passif. Les moyens de filtrage passif sont composés uniquement de condensateurs, résistances et inductances, qui ne peuvent pas être pilotés. Ces moyens de filtrage actif (7, 7') associés à un condensateur (2') de capacité réduite, voire très réduite, par rapport à la solution classique jouent le rôle de l'ensemble de condensateurs (2) utilisé dans l'art antérieur, c'est-à-dire de stabiliser le courant et la tension de bus, tout en permettant une diminution de la taille de l'ensemble de condensateurs. Classiquement, les moyens de filtrage actif (7, 7') comprennent des interrupteurs commandés, qui sont très peu encombrants. Le condensateur (2') permet de réduire les fluctuations de la tension de bus $v_{DC}$.

On appelle dispositif électrique (DE), un dispositif nécessitant un courant et une tension pour fonctionner, il peut s'agir d'une machine électrique (4) de traction du véhicule, ou de tout type d'organe électrique pouvant être installé à bord des véhicules ou alimenté en énergie par une batterie électrique, tels que des organes de direction, des outils, des compresseurs... Toutefois, dans la suite de la description et sur les figures 2 à 17, on s'intéressera essentiellement aux dispositifs électriques constitués d'une machine électrique (4) et d'un onduleur (3). En effet, ce type de dispositif électrique (DE) est celui qui modifie le plus le contenu harmonique des grandeurs continues fournies par la source. Une telle machine électrique (4) peut être une machine électrique synchrone triphasée. L'onduleur (3) permet de convertir un signal électrique continu en un signal électrique alternatif adapté notamment pour alimenter une machine électrique. Classiquement, un onduleur (3) est constitué de trois bras d'onduleur (un pour chaque phase de la machine électrique triphasée), chaque bras d'onduleur comporte deux interrupteurs commandés complémentaires. La commande de ces interrupteurs utilise généralement une modulation de largeur d'impulsion (MLI ou PWM en anglais pour Pulse Width Modulation).

On appelle source d'énergie électrique (S) tout moyen permettant de fournir un courant et une tension électrique, il s'agit dans notre cas essentiellement de batteries électriques (5) aptes à alimenter en courant et tension continus au moins un dispositif électrique (DE).

Dans un mode de réalisation préféré, ledit dispositif électrique (DE) est connecté à ladite source par un bus continu commun (1), sur lequel sont également connectés lesdits moyens de filtrage actif (7, 7').

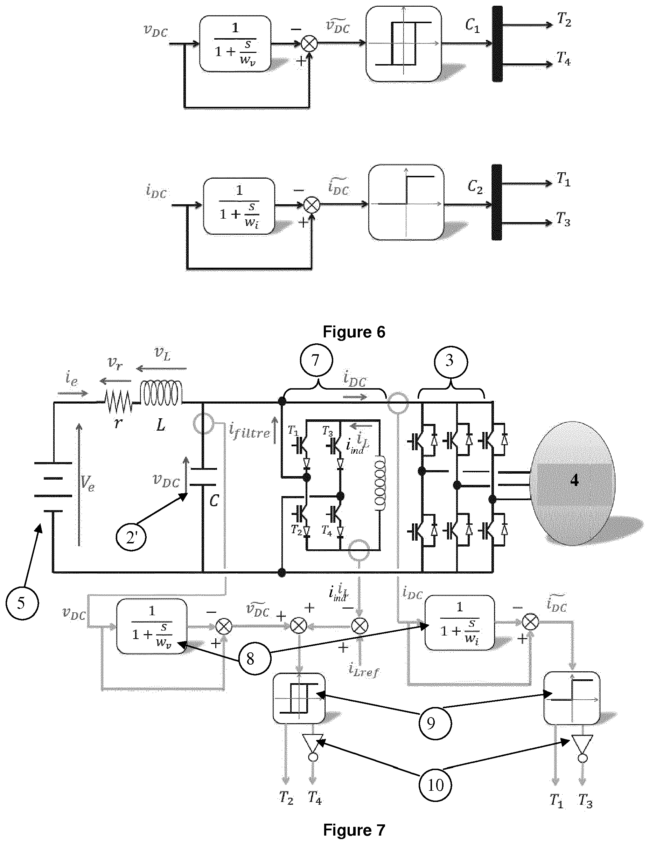

L'objectif du filtrage actif (7, 7') proposé est de permettre l'injection et l'absorption des ondulations et donc des harmoniques du courant d'entrée $i_{DC}$ du dispositif électrique (DE), et de réduire les fluctuations de la tension du bus continu $v_{DC}$ (égal à la tension aux bornes de la source (S)). Le courant d'entrée d'onduleur $i_{DC}$ est celui circulant dans le dispositif électrique (DE). En appliquant la loi des mailles au schéma électrique de la figure 7, le courant d'entrée d'onduleur $i_{DC}$ peut être calculé en fonction du courant fourni par la source $i_e$, du courant circulant dans le condensateur $i_c$, et du courant circulant dans les moyens de filtrage actif (7) $i_{filtre}$ : $i_{DC} = i_e - i_c + i_{filtre}$.

Selon une première variante de réalisation de l'invention, ce filtre peut être constitué de quatre interrupteurs (T1 à T4) commandés formant un pont en H et d'un inducteur (L), placé en parallèle dudit pont (figure 6), il a alors une topologie d'onduleur de courant monophasé. Il est ainsi bidirectionnel en tension et en courant et est connecté directement en parallèle avec le condensateur réduit (2'). Il permet l'injection d'un courant $i_{ind}$ via une source de courant composée d'un inducteur d'inductance L.

Dans ce mode de réalisation représenté aux figures 5 à 7, la génération du courant en sortie de filtre est pilotée par les deux variables que sont les ondulations de la tension du bus continu $\tilde{v}_{DC}$ ainsi que celles du courant d'entrée d'onduleur $\tilde{i}_{DC}$. On appelle ondulations de la tension et du courant les variations de ces grandeurs autour de leurs composantes continues, on note les ondulations $\tilde{i}$ et $\tilde{v}$.

Avantageusement, la commande des interrupteurs T1 à T4 est réalisée par deux boucles de régulation

comprenant respectivement un filtre passe haut (8) et un régulateur (9) (figures 5, 6 et 7), chaque boucle de régulation commandant deux interrupteurs. Les régulateurs (9) utilisés dans ces boucles de régulation des interrupteurs peuvent être des comparateurs à hystérésis. Les filtres passe-haut (8) utilisés sont caractérisés par leur fréquence de coupure $w_i$ et $w_c$ qui sont déterminés pour conserver uniquement les ondulations haute fréquence de la tension $v_{DC}$ et du courant $i_{DC}$, c'est-à-dire uniquement les ondulations du courant $\tilde{i}_{DC}$ et de la tension $\tilde{v}_{DC}$.

On note que la variable de la transformée de Laplace est notée s. En outre, $C_1$ et $C_2$ désignent les signaux de commande (tout ou rien) issus des boucles de régulation de la commande des moyens de filtrage actif (7), ces signaux sont appliqués directement, ou après inversion aux interrupteurs T1 à T4.

Les interrupteurs T2 et T4 ne dépendent que de l'état de la commande $C_1$ et donc de l'atteinte des bornes d'hystérésis par la tension de bus $v_{DC}$. La fréquence de changement de l'état de la commande $C_1$ dépend ainsi de la rapidité de croissance ou de décroissance de la tension $v_{DC}$ et de la largeur de la bande d'hystérésis, et est donc influencée par la valeur de la capacité du condensateur (2'). En effet, plus la capacité est grande et plus la pente de la tension est faible, ce qui induit une fréquence d'atteinte des bornes d'hystérésis moindre (9). Mais si la capacité est faible (par exemple inférieure à 100μF), la fréquence de commutation des interrupteurs T2 et T4 est augmentée et peut devenir impossible à réaliser et la fréquence augmente également les pertes par commutation. La valeur de la capacité du condensateur (2') a donc une influence directe sur la topologie de commande du filtre actif, ce qui limite la valeur du condensateur (2'). Par exemple, un condensateur (2') de capacité supérieure à 100 μF paraît acceptable, en effet à partir de cette valeur de capacité, la fréquence de commutation nécessaire est de l'ordre de 100 kHz. On rappelle qu'une capacité de 100μF entraîne une instabilité du système électrique de l'art antérieur.

La régulation du courant inducteur à injecter $i_{ind}$ s'effectue via la régulation de la tension de bus continu. La tension du bus continu aux bornes du condensateur réduit (2') peut servir de source de tension qui permet la régulation du courant $i_{ind}$. Ainsi, afin de réguler le courant à sa valeur constante déterminée théoriquement, nous ajoutons aux ondulations de tension $\tilde{v}_{DC}$ l'erreur obtenue par : $i_{ind}^{ref} - i_{ind}$. Par cette approche, le régulateur à hystérésis permet de corriger l'erreur du courant inducteur en même temps que le confinement de la tension $\tilde{v}_{DC}$ dans la bande d'hystérésis. Le schéma de régulation est donnée en figure 7. Sur cette figure, le signe de référence 10 désigne une porte inverseuse, permettant la mise en oeuvre d'un mode de réalisation de la commande du système selon l'invention :

- Quand l'ondulation du courant $\tilde{i}_{DC}$ est positive, c'est-à-dire circulant à travers le dispositif électrique (DE), le filtre actif (7) injecte le courant inducteur $i_{ind}$ sur le bus continu (1). Pour cela, les interrupteurs commandés par les signaux de commande, T1 et T4 sont fermés (T2 et T3 étant ouverts).

- Quand l'ondulation de $\tilde{i}_{DC}$ est négative, donc injectée sur le bus (1), le filtre actif absorbe le courant et par conséquent les interrupteurs commandés par T2 et T3 sont fermés (T1 et T4 étant ouverts).

- Deux états de roue libre sont autorisés (T1 et T2 fermés ou T3 et T4 fermés) et permettent de faire croître ou décroître la tension du bus $\tilde{v}_{DC}$ aux bornes du condensateur (2') selon que celle-ci dépasse les limites d'amplitude d'ondulations spécifiées, par exemple du comparateur à hystérésis.

Selon l'invention, au moins une partie, de préférence la totalité, des moyens de filtrage actifs est intégrée au sein du dispositif électrique (DE). Ainsi l'encombrement du système électrique selon l'invention est réduit d'une part parce le condensateur (2') est réduit et d'autre part parce que les moyens de filtrage actif sont au moins partiellement situés dans le volume du dispositif électrique (DE). On considère qu'un composant est intégré dans un élément, si le composant est positionné dans/sur l'élément de telle sorte que le volume de l'ensemble (élément et composant) n'excède pas le volume de l'élément seul. Dans le cas du mode de réalisation de la figure 5, plusieurs possibilités d'intégration des moyens de filtrage actif, prises seules ou en combinaison, sont envisageables :

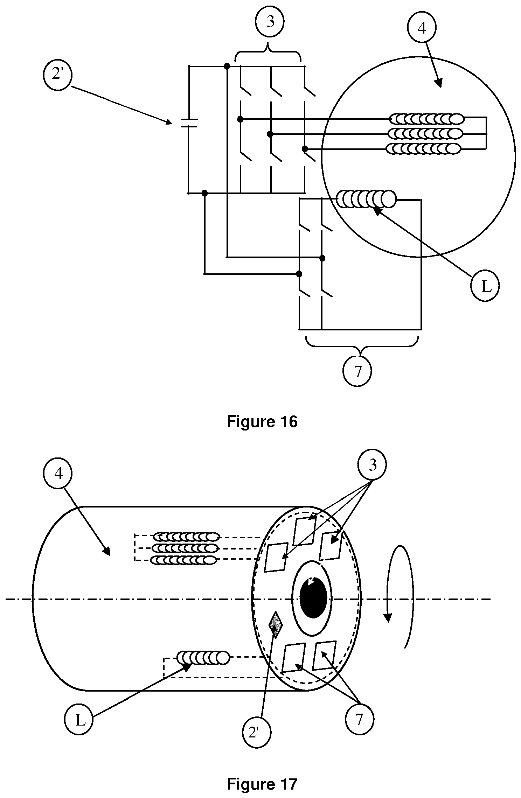

- l'inducteur (L) est inséré au sein de la machine électrique (4), de préférence à proximité des bobinages de la machine électrique. La figure 16 illustre ce mode de réalisation.

- les interrupteurs (T1 à T4) des moyens de filtrage actif sont disposés sur le stator de la machine électrique (4), ce qui permet de réduire notamment les éléments de câblage entre l'électronique de puissance et la machine électrique. Ceci permet également de limiter l'encombrement du système électrique.

- les interrupteurs des bras d'onduleur (3) peuvent également être disposés directement sur le stator de la machine électrique (4). Ainsi on réduit les éléments de câblage et l'encombrement du système électrique.

- le condensateur (2') est posé directement sur le stator de la machine électrique. En effet, les dimensions du condensateur (2') réduites grâce au filtrage actif par rapport au condensateur (2) utilisé dans l'art antérieur rendent possibles le positionnement du condensateur (2') sur le stator de la machine électrique (4).

La figure 17 illustre un exemple d'intégration des composants dans la machine électrique, prenant en compte toutes les possibilités évoquées ci-dessus : l'intégration de l'inducteur (L), positionnement des interrupteurs des moyens de filtrage actif (7), positionnement des interrupteurs de l'onduleur (3), et positionnement du condensateur (2') directement sur le stator de la machine électrique (4). Ainsi, le volume du système électrique se limite au volume de la source électrique (S) et au volume de la machine électrique (4).

Exemple de réalisation de la première variante

On a réalisé des simulations du système électrique comprenant les moyens de filtrage actif (7) illustrés à la figure 7, c'est-à-dire un système composé d'une batterie (5), d'un filtre actif (7) et d'un ensemble onduleur (3) et machine électrique (4). Un condensateur (2') de faible capacité (100 $\mu$F) est utilisé. On rappelle qu'avec une telle capacité, la solution de l'art antérieur entraîne de l'instabilité.

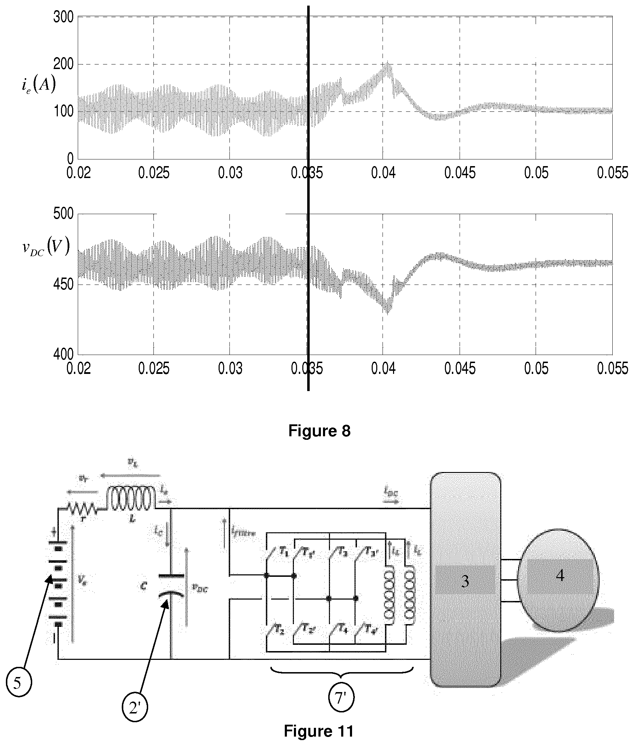

Une première simulation est entreprise, pour laquelle on suppose que l'inductance de fuite due au câblage est faible (quelques $\mu$H) ce qui assure la stabilité du système. Les résultats sont donnés en figure 8.

A partir de t=0,035 s, on active les moyens de filtrage actif, l'activation du filtre actif permet le confinement de la tension du bus continu et du courant de source à l'intérieur d'une bande hystérétique dont la largeur a été spécifiée. Le filtre permet de supprimer les variations d'ondulations dues à la modulation de l'onduleur.

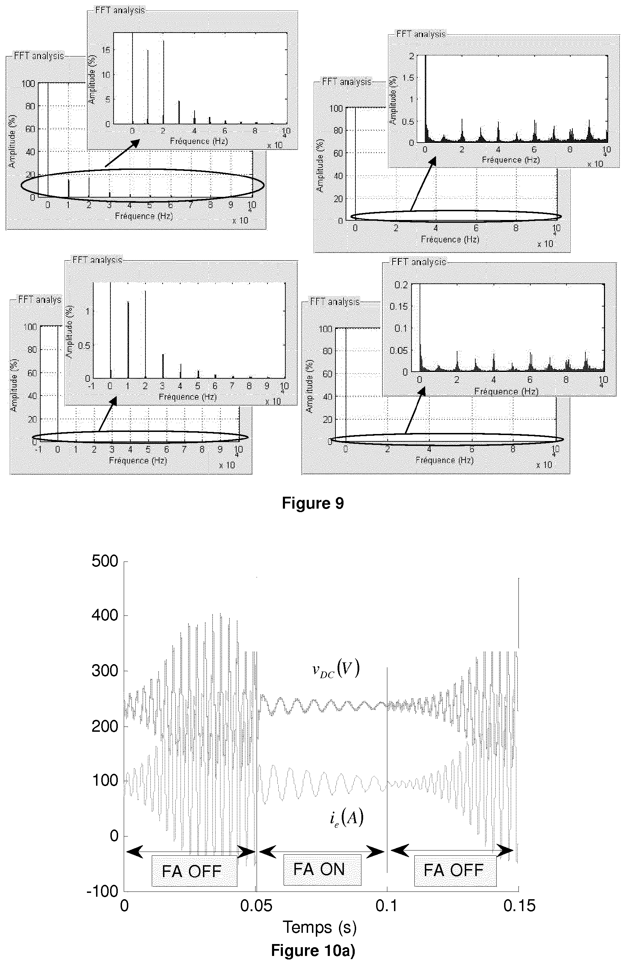

Les résultats de la figure 9 montrent la manière dont agit le filtre sur les spectres fréquentiels des grandeurs de la figure 8 (courant de source $i_e$ et tension du bus continu $v_{DC}$). La fréquence de découpage de l'onduleur ($f_d$) est de 10kHz, pour obtenir des signaux côté alternatif (f) de 50Hz. La modulation provoquée par la MLI fournit des raies spectrales aux fréquences : 9,85 kHz, 10,15 kHz, 20 kHz, 29,85 kHz, 30,15 kHz, 40kHz... qui correspondent à $(2n+1)f_d \pm 3f$ et $(2n)f_d \pm 6f$, n étant le rang d'harmonique.

L'activation du filtre actif provoque un étalement de spectre et conserve de manière très prédominante la composante continue. Les amplitudes maximales des harmoniques pour le courant de source $i_e$ et la tension de bus $v_{DC}$ restent inférieures respectivement à 0.5% et 0.05% du "fondamental" alors qu'elles représentaient 17% et 1,25% avant l'activation du filtre actif. Ces résultats sont comparables dans leurs objectifs à ceux obtenus côté alternatif lors de l'utilisation des techniques de MLI particulières (hystérésis ou RSVM : "Random Space Vector Modulation" : modulation vectorielle aléatoire).

Une deuxième simulation est entreprise où l'inductance de câblage n'est plus négligeable (installation de bord d'avion ou ferroviaire par exemple), et qui provoque un comportement instable du système. L'effet du filtre actif (7) sur la stabilité du système est illustré aux figures 10a) et 10b). A t=0,05s on active les moyens de filtrage actif, et on les désactive à t=0,1s. Sans filtre actif, le système évolue vers un état instable qui se traduit par la divergence de la tension de bus continu $v_{DC}$ et du courant de *source* $i_e$ de leur point de fonctionnement. L'activation du filtre actif (7) provoque une stabilisation du système dont la convergence des grandeurs témoigne de l'efficacité. Dès lors que le filtre actif est désactivé, l'état instable réapparaît.

Variantes de réalisation

Les variantes de réalisation décrites ci-dessous peuvent être réalisées seules, en combinaison avec le premier mode de réalisation ou en combinaison avec les autres variantes de réalisation.

Dans le mode de réalisation illustré à la figure 7, on utilise un autre type d'interrupteurs dans l'onduleur (3) et dans le filtre actif (7), ils sont composés d'une diode et d'un transistor. Par exemple, il peut s'agir d'une association d'un transistor IGBT (transistor bipolaire à grille isolée, de l'anglais Insulated Gate Bipolar Transistor) associé en série à une diode. Ce type d'interrupteur peut être commandé et présente l'avantage d'être rapide et est donc adapté à l'utilisation dans une méthode de transformation d'une énergie électrique continue en une énergie électrique alternative.

En variante, la commande du filtre actif est réalisée de manière analogique afin de simplifier la mise en oeuvre de la commande. Dans ce mode de réalisation, on utilise des amplificateurs opérationnels, des résistances, des condensateurs et des potentiomètres pour commander le filtre actif.

Pour diminuer l'encombrement des moyens de filtrage actif, il peut être envisagé de réduire la taille de l'inducteur (L) utilisé dans le premier mode de réalisation. Toutefois, la réduction de la taille de l'inducteur (L) est limitée par la valeur du courant le traversant. C'est pourquoi il a été proposé en figure 11 une deuxième variante de réalisation des moyens de filtrage actif (7') permettant une réduction du courant inducteur. La réduction du courant inducteur est possible par une modification de la topologie initialement proposée, cette modification correspond à une segmentation en entrée des moyens de filtrage actif (7') : les moyens de filtrage actif (7') sont constitués de huit interrupteurs (T1 à T4 et T1' à T4') commandés formant deux ponts en H et de deux inducteurs (L), placés respectivement en parallèle d'un desdits ponts. La commande des interrupteurs est identique à celle de la première variante de réalisation décrit ci-dessus. Le courant traversant chaque inductance est ainsi égal à la moitié de la valeur qui doit théoriquement être injectée (ou absorbée) sur le bus continu. La commande des interrupteurs est ainsi dupliquée. Avantageusement, les deux inducteurs (L) sont insérés au sein de la machine électrique (4) à proximité des bobinages de la machine électrique (4) et les huit interrupteurs (T1 à T4 et T1' à T4') sont disposés sur le stator de la machine électrique (4).

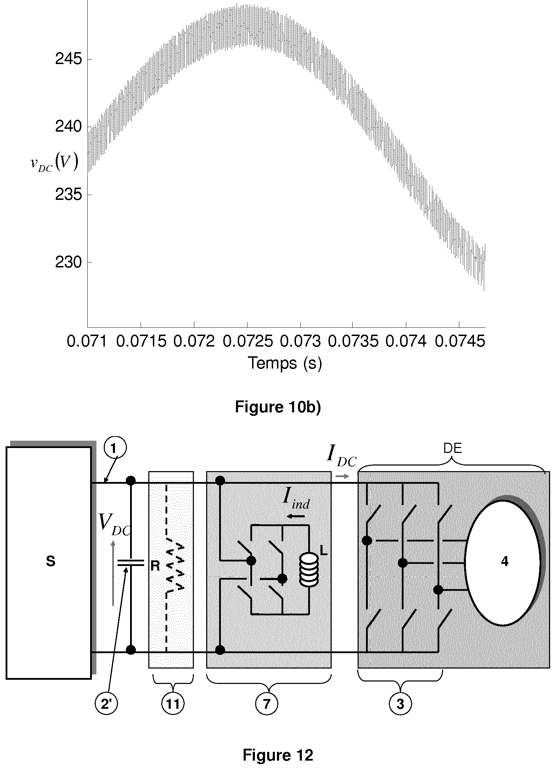

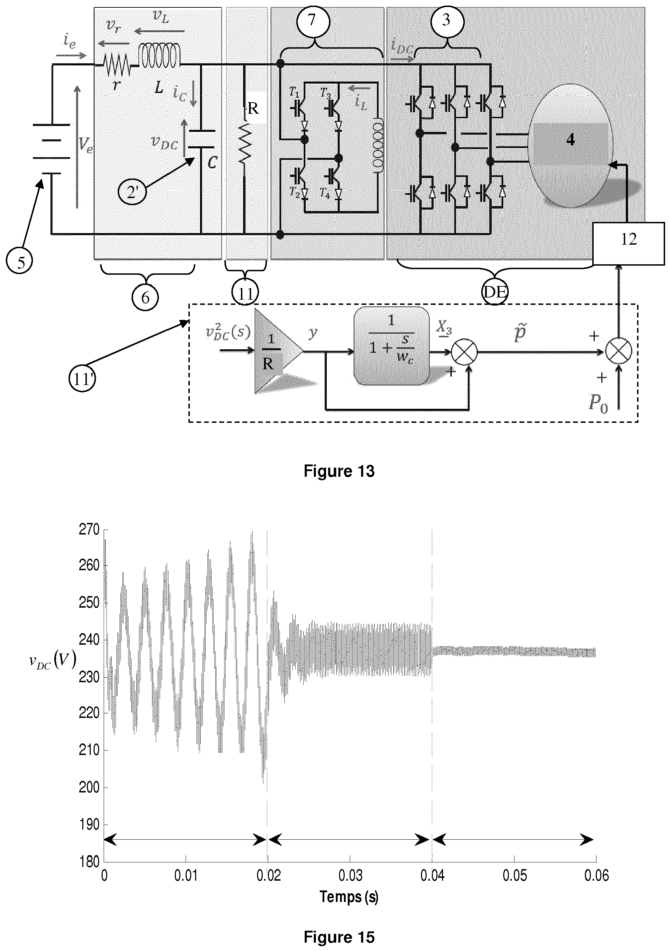

Bien que le filtre agisse également sur la stabilisation du système, il peut être nécessaire de corriger le faible amortissement pour améliorer la rapidité de convergence des grandeurs. Effectivement, bien qu'elles soient confinées comme le montre la figure 10b), les grandeurs convergent par des oscillations très peu amorties. Dans une variante préférée de réalisation de l'invention, illustrée à la figure 12, l'amélioration de la rapidité de convergence des grandeurs est réalisée par des moyens de stabilisation dynamique (11), pouvant correspondre à une boucle de régulation (11') dans la commande de la machine électrique (4). Cette stabilisation peut être réalisée par l'ajout d'un amortissement "virtuel". Le but est d'introduire virtuellement le comportement d'une résistance R (11) qui serait directement placée en parallèle du condensateur (2') de bus continu et du filtre actif tel que le présente le schéma de la figure 13. L'utilisation d'une résistance virtuelle est décrite notamment dans le document :

- Ahmed-Bilal AWAN and Babak NAHID-MOBARAKEH. "Nonlinear stabilization of a dc-bus supplying a constant power load". IEEE, 2009

L'idée est de générer une puissance proportionnelle au carré des ondulations de la tension du bus continu $\tilde{p} = \dfrac{v_{DC}^{-}}{R}$. Cette *puissance* $\tilde{p}$ est ensuite ajoutée à la puissance nominale $P_0$ du dispositif électrique qui adapte sa demande en puissance en fonction des fluctuations plus ou moins fortes de la tension. La puissance ainsi déterminée $\tilde{p}$ est utilisée dans la commande (12) du dispositif électrique (DE), par exemple de la machine électrique (4), pour adapter le comportement du dispositif électrique (DE) afin d'éviter l'apparition d'oscillations dans le bus continu. Ainsi, les fluctuations du courant et de la tension du bus continu sont évitées grâce à la commande du dispositif électrique (DE). La combinaison de la résistance virtuelle (11) avec le filtre actif (7) présente un moyen efficace visant à assurer la stabilité et améliorer la qualité de l'énergie électrique. Dans un mode de réalisation, illustré à la figure 13, les moyens de stabilisations dynamiques sont constitués d'un gain $\dfrac{1}{R}$, $R$ étant la valeur de la résistance virtuelle (11), et d'un filtre passe-bas. Dans ce schéma, le bus commun comporte une résistance R et une inductance L permettant de modéliser la résistance et l'inductance internes (inductance de câblage) des connexions et de la batterie (5).

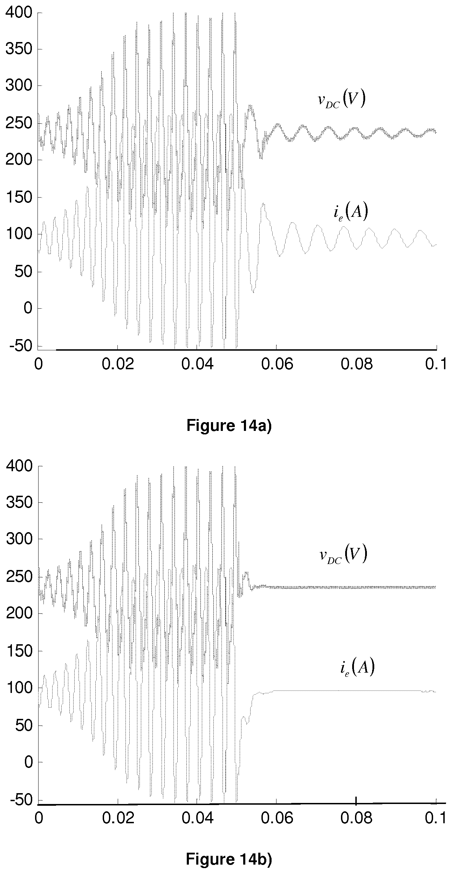

La stabilisation par filtre actif (7) avec et sans résistance virtuelle (11) est illustrée aux figures 14a) et 14b). La figure 14a) représente le comportement d'un système électrique selon la première variante de réalisation avec des moyens de filtrage actif (7) seuls, la figure 14b) représente le comportement d'un système électrique selon la troisième variante de réalisation avec des moyens de filtrage actif (7) associés à des moyens de stabilisation dynamique (11). L'ajout d'un amortissement supplémentaire via la résistance virtuelle permet de faire converger les grandeurs sans oscillations. Il est donc intéressant d'associer le filtrage actif avec une méthode de stabilisation dynamique lorsque ce dernier est appliqué à un système instable, c'est-à-dire suite à une forte réduction des condensateurs de bus continu par rapport aux solutions de l'art antérieur.

Les rôles détaillés du filtre actif et de la résistance fictive sont présentés en figure 15. Sans système stabilisant (de t=0s à t=0,02s), la trop forte réduction des condensateurs entraine un comportement instable du système. A t=0,02s, l'activation de la résistance fictive seule implique une convergence de la tension du bus mais les fluctuations provoquées par la modulation de l'onduleur restent inchangées. Celles-ci sont supprimées lors de l'activation du filtre actif à t=0,04s. La tension du bus est alors maîtrisée même si le condensateur du bus est réduit.

Cette variante de réalisation de l'invention, est un mode de réalisation intéressant en vue de la réduction des éléments passifs, de l'amélioration de la qualité de l'énergie du bus continu ainsi que de la réduction des contraintes sur la source d'énergie embarquée (batterie). De plus, la réduction des contraintes sur la source d'énergie (S) embarquée permet d'augmenter la durée de vie de celle-ci. Cette variante permet d'assurer une bonne qualité de l'énergie électrique et empêche le système d'entrer dans un état instable par maîtrise et confinement des grandeurs électriques du bus continu. La combinaison des moyens de filtrage actif et de la stabilisation dynamique est efficace pour la diminution des contraintes liées au poids et au volume (encombrement) des condensateurs. Par exemple, dans le domaine de l'automobile, les capacités utilisées actuellement sont de l'ordre de 3000 $\mu$F. L'invention permet une réduction de cette valeur d'environ six fois ; un condensateur de 500 $\mu$F peut être suffisant.

La solution proposée est ainsi parfaitement adaptable à tout type de systèmes embarqués et donc aux domaines d'activités cités ci-dessus (automobile, ferroviaire, aéronautique et navale).

**Revendications**

1. Système électrique comprenant :

   - au moins une source (S) d'énergie électrique à puissance continue,
   - au moins un dispositif électrique (DE) connecté à ladite source (S) par un bus continu commun (1), ledit dispositif électrique (DE) comprenant au moins un onduleur (3) et une machine électrique (4),
   - un condensateur (2') connecté en parallèle dudit dispositif électrique (DE),
   - des moyens de filtrage actif commandés (7, 7') connectés sur le bus continu commun (1) entre ladite source (S) et ledit dispositif électrique (DE), pour injecter ou absorber des ondulations du courant fourni $i_e$ par ladite source (S) et pour réduire les fluctuations de la tension $v_{DC}$ aux bornes de ladite source (S),

**caractérisé en ce que lesdits moyens de filtrage actifs (7, 7') comportent** au moins un composant intégré au sein de la machine électrique (4) dudit dispositif électrique (DE) et **en ce que** ledit condensateur (2') est disposé sur le dispositif électrique (DE).

2. Système électrique selon la revendication 1, dans lequel ledit onduleur (3) comprend des interrupteurs commandés posés sur ladite machine électrique (4).

3. Système électrique selon l'une quelconque des revendications 1 ou 2, dans lequel lesdits moyens de filtrage actif (7) sont constitués de quatre interrupteurs (T1 à T4) commandés formant un pont en H et d'un inducteur (L), placé en parallèle dudit pont et intégré au sein de ladite machine électrique (4).

4. Système électrique selon l'une des revendications 1 ou 2, dans lequel lesdits moyens de filtrage actif (7') sont constitués de huit interrupteurs (T1 à T4 et T1' à T4') commandés formant deux ponts en H et de deux inducteurs (L), placés respectivement en parallèle d'un desdits ponts et intégrés au sein de ladite machine électrique (4).

5. Système électrique selon l'une des revendications 3 ou 4, dans laquelle lesdits interrupteurs (T1 à T4 ; T1 à T4 et T1' à T4') sont posés sur ladite machine électrique (4).

6. Système électrique selon l'une des revendications 3 à 5, dans lequel les interrupteurs (T1 à T4 ; T1 à T4 et T1' à T4') sont commandés par deux boucles de régulation, comprenant respectivement un filtre passe haut (8) et un régulateur (9), chaque boucle de régulation commandant deux interrupteurs.

7. Système électrique selon la revendication 6, dans lequel ledit régulateur (9) est un comparateur à hystérésis.

8. Système électrique selon l'une des revendications précédentes, dans lequel lesdits moyens de filtrage actif (7, 7') sont connectés directement en parallèle dudit condensateur.

9. Système électrique selon l'une des revendications précédentes, dans lequel la commande desdits moyens de filtrage actif (7, 7') est dépendante de deux variables qui sont le signe de l'ondulation du courant d'entrée de l'onduleur $\tilde{i}_{DC}$ et les ondulations de la tension de bus $\tilde{v}_{DC}$.

10. Système électrique selon l'une des revendications précédentes, dans lequel le système comporte des moyens de stabilisation dynamique (11) du courant $i_e$ fourni par ladite source et de la tension $v_{DC}$ aux bornes de ladite source.

11. Système électrique selon la revendication 10, dans lequel lesdits moyens de stabilisation dynamique correspondent à une boucle de régulation (11') dans la commande de ladite machine électrique (4) qui a le même effet qu'une résistance R qui serait directement placée en parallèle du condensateur et des moyens de filtrage actif (7, 7').

12. Système électrique selon la revendication 11, dans lequel la boucle de régulation desdits moyens de stabilisation dynamique (11') est constituée d'un gain $\dfrac{1}{R}$ et d'un filtre passe-bas.

13. Véhicule, notamment hybride ou électrique, **caractérisé en ce qu'**il comporte un système électrique selon l'une des revendications précédentes.


**Patentansprüche**

1. Elektrisches System, umfassend:

   - mindestens eine Quelle (S) für elektrische Dauerleistungsenergie,
   - mindestens eine elektrische Vorrichtung (DE), die mit dieser Quelle (S) über einen gemeinsamen Gleichstrombus (1) verbunden ist, wobei die elektrische Vorrichtung (DE) mindestens einen Stromrichter (3) und eine elektrische Maschine (4) umfasst,
   - einen Kondensator (2'), der parallel zur elektrischen Vorrichtung (DE) geschaltet ist,
   - Mittel zur aktiven Filterung (7, 7'), die an den gemeinsamen Gleichstrombus (1) zwischen der Quelle (S) und der elektrischen Vorrichtung (DE) angeschlossen sind, um Welligkeiten des Stromes $i_e$, der von der Quelle (S) geliefert wird, einzuspeisen oder zu absorbieren, und um die Schwankungen der Spannung $V_{DC}$ an den Anschlüsse der Quelle (S) zu reduzieren, **dadurch gekennzeichnet, dass** die Mittel zur aktiven Filterung (7, 7') mindestens eine Komponente, die in die elektrische Maschine (4) der elektrischen Vorrichtung (DE) integriert ist, umfassen, und dadurch, dass der Kondensator (2') auf der elektrischen Vorrichtung (DE) angeordnet ist.

**2.** Elektrisches System nach Anspruch 1, wobei der Stromrichter (3) gesteuerte Schalter umfasst, die auf der elektrischen Maschine (4) angebracht sind.

**3.** Elektrisches System nach einem der Ansprüche 1 oder 2, wobei die Mittel zur aktiven Filterung (7) aus vier gesteuerten Schaltern (T1 bis T4), die eine H-Brücke bilden und einem Induktor (L), der parallel zur Brücke angeordnet und in die elektrische Maschine (4) integriert ist, bestehen.

**4.** Elektrisches System nach einem der Ansprüche 1 oder 2, wobei die Mittel zur aktiven Filterung (7') aus acht gesteuerten Schaltern (T1 bis T4 und T1' bis T4'), die zwei H-Brücken bilden und zwei Induktoren (L), die jeweils parallel zu einer der Brücken angeordnet und in die elektrische Maschine (4) integriert sind, bestehen.

**5.** Elektrisches System nach einem der Ansprüche 3 oder 4, wobei die Schalter (T1 bis T4; T1 bis T4 und T1' bis T4') auf der elektrischen Maschine (4) angebracht sind.

**6.** Elektrisches System nach einem der Ansprüche 5 bis 7, wobei die Schalter (T1 bis T4; T1 bis T4 und T1 bis T4') von zwei Regelkreisen gesteuert werden, die jeweils einen Hochpassfilter (8) und einen Regler (9) umfassen, wobei jeder Regelkreis zwei Schalter steuert.

**7.** Elektrisches System nach Anspruch 6, wobei es sich bei dem Regler (9) um einen Hysteresekomparator handelt.

**8.** Elektrisches System nach einem der vorhergehenden Ansprüche, wobei die Mittel zur aktiven Filterung (7, 7') direkt parallel an den Kondensator angeschlossen sind.

**9.** Elektrisches System nach einem der vorhergehenden Ansprüche, wobei die Steuerung der Mittel zur aktiven Filterung (7, 7') von zwei Variablen abhängig ist, bei denen es sich um das Vorzeichen der Welligkeit des Eingangsstroms des Stromrichters $\tilde{i}_{Dc}$ und um die Welligkeiten der Busspannung $\tilde{v}_{DC}$ handelt.

**10.** Elektrisches System nach einem der vorhergehenden Ansprüche, wobei das System Mittel zur dynamischen Stabilisierung (11) des Stroms $i_e$, der von der Quelle bereitgestellt wird, und der Spannung $v_{dc}$ an den Anschlüssen der Quelle umfasst.

**11.** Elektrisches System nach Anspruch 10, wobei die Mittel zur dynamischen Stabilisierung einem Regelkreis (11') in der Steuerung der elektrischen Maschine (4) entsprechen, der die gleiche Wirkung hat wie ein Widerstand R, der direkt parallel zum Kondensator angeordnet wäre, und Mittel zur aktiven Filterung (7, 7').

**12.** Elektrisches System nach Anspruch 11, wobei der Regelkreis der Mittel zur dynamischen Stabilisierung (11') aus einem Verstärker $\dfrac{1}{R}$ und einem Tiefpaßfilter besteht.

**13.** Fahrzeug, insbesondere Hybrid- oder Elektrofahrzeug, **dadurch gekennzeichnet, dass** es ein elektrisches System nach einem der vorhergehenden Ansprüche umfasst.

**Claims**

**1.** An electrical system comprising:

- at least one continuous-power electrical energy source (S),
- at least one electrical device (DE) connected to said source (S) by a common continuous bus (1), said electrical device (DE) comprising at least one inverter (3) and an electric machine (4),
- a capacitor (2') connected in parallel with said electrical device (DE),
- controlled active filter means (7, 7') connected on common continuous bus (1) between said source (S) and said electrical device (DE), for injecting or absorbing undulations of the current $i_e$ provided by said source (S) and for reducing the fluctuations of voltage $V_{DC}$ at the terminals of said source (S),

**characterized in that said active filter means (7, 7') comprise** at least one component integrated within electric machine (4) of said electrical device (DE) and **in that** said capacitor (2') is arranged on electrical device (DE).

**2.** An electrical system as claimed in claim 1, wherein said inverter (3) comprises controlled switches arranged on said electric machine (4).

**3.** An electrical system as claimed in any one of claims 1 or 2, wherein said active filter means (7) consist of four controlled switches (T1 to T4) forming an H bridge and of an inductor (L) arranged in parallel with said bridge and integrated within said electric machine (4).

**4.** An electrical system as claimed in any one of claims 1 or 2, wherein said active filter means (7') consist of eight controlled switches (T1 to T4 and T1' to T4') forming two H bridges and of two inductors (L) respectively arranged in parallel with one of said bridges and integrated within said electric machine (4).

5. An electrical system as claimed in any one of claims 3 or 4, wherein said switches (T1 to T4; T1 to T4 and T1' to T4') are arranged on said electric machine (4).

6. An electrical system as claimed in any one of claims 3 to 5, wherein switches (T1 to T4; T1 to T4 and T1' to T4') are controlled by two feedback loops comprising a highpass filter (8) and a regulator (9) respectively, each feedback loop controlling two switches.

7. An electrical system as claimed in claim 6, wherein said regulator (9) is a hysteresis comparator.

8. An electrical system as claimed in any one of the previous claims, wherein said active filter means (7, 7') are directly connected in parallel with said capacitor.

9. An electrical system as claimed in any one of the previous claims, wherein the control of said active filter means (7, 7') depends on two variables which are the sign of the undulation of the inverter input current $\tilde{i}_{DC}$ and the undulations of the bus voltage $\tilde{v}_{DC}$.

10. An electrical system as claimed in any one of the previous claims, wherein the system comprises means (11) of dynamic stabilization of current $i_e$ supplied by said source and of voltage $V_{DC}$ at the terminals of said source.

11. An electrical system as claimed in claim 10, wherein said dynamic stabilization means correspond to a feedback loop (11') in the control of said electric machine (4) having the same effect as a resistor R that would be directly arranged in parallel with the capacitor and active filter means (7, 7').

12. An electrical system as claimed in claim 11, wherein the feedback loop of said dynamic stabilization means (11') consists of a gain $\dfrac{1}{R}$ and of a low-pass filter.

13. A vehicle, notably hybrid or electric, **characterized in that** it comprises an electrical system as claimed in any one of the previous claims.

**Figure 1**

$V_{DC}$

S

①

DE
n° 1

DE
n° N

**Figure 2
Art antérieur**

S

①

$V_{DC}$

DE

②  ③

④

**Figure 3
Art antérieur**

$V_{batterie}$

①  ⑥  $L_f$

$V_{DC}$

$C_{DC}$

DE

④

⑤

②  ③

**Figure 4**

**Figure 5**

**Figure 6**

**Figure 7**

Figure 8

Figure 11

**Figure 9**

$v_{DC}(V)$

$i_e(A)$

FA OFF  FA ON  FA OFF

Temps (s)

**Figure 10a)**

**Figure 10b)**

**Figure 12**

**Figure 13**

**Figure 15**

**Figure 14a)**

**Figure 14b)**

Figure 16

Figure 17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102005041936 A1

**Littérature non-brevet citée dans la description**

- **AHMED-BILAL AWAN ; BABAK NAHID-MOBAR-AKEH.** Nonlinear stabilization of a dc-bus supplying a constant power load. IEEE, 2009